# EUROPEAN PATENT SPECIFICATION

(11) **EP 4 479 925 B1**
(45) Date of publication and mention of the grant of the patent: **12.08.2026**
(21) Application number: 22944663.8
(22) Date of filing: 09.12.2022
(51) Int. Cl.: G06T 3/40, G06T 3/4038, G06T 7/30

(54) **METHODS AND SYSTEMS FOR DATA PROCESSING**
VERFAHREN UND SYSTEME ZUR DATENVERARBEITUNG
PROCÉDÉS ET SYSTÈMES DE TRAITEMENT DE DONNÉES

(30) Priority: 30.05.2022 CN 202210596077
(43) Date of publication of application: 25.12.2024
(73) Proprietor: Zhejiang Dahua Technology Co., Ltd., Hangzhou, Zhejiang 310053 (CN)
(72) Inventor: HUANG, Hongming, Hangzhou, Zhejiang 310053 (CN); SU, Zhaoxing, Hangzhou, Zhejiang 310053 (CN)
(74) Representative: Wang, Bo
(86) International application number: PCT/CN2022/138025
(87) International publication number: WO 2023/231362

(56) References cited:
- CN-A- 107 154 022
- CN-A- 113 269 671
- CN-A- 115 205 110
- CN-B- 106 683 043
- US-A1- 2013 057 546
- US-A1- 2017 127 045

## Description

### TECHNICAL FIELD

The present disclosure relates to a technical field of image processing, in particular, relates to methods, systems, and storage mediums for producing a panoramic image.

### BACKGROUND

A panoramic imaging technology is an imaging technology widely used in various fields, such as video monitoring or terminal camera shooting in airports, viaducts, docks, restaurants, shopping malls, and other places. The panoramic imaging technology may obtain a plurality of images by multiple imaging shots, and further obtain the panoramic image by stitching the multiple imaging shots. In the panoramic imaging technology, it often occurs that the problems such as the other subjects blocking in the middle of the screen or the low imaging quality of the middle of the screen affect the imaging quality and image perception.

Therefore, it is desirable to provide a method, system, and storage medium for producing the panoramic image to improve the imaging quality and image perception of the panoramic image. CN106683043B discloses a parallel image stitching method for a multi-channel optical detection system in the field of image processing. The method includes downsampling the acquired images, selecting a reference image, and defining a stitching order. Features of adjacent images are extracted and filtered to determine optimal feature point pairs and corresponding transformation matrices. The transformation matrix of each image relative to the reference image is then calculated based on the defined stitching order, and all images are stitched accordingly. This approach enables parallel stitching to the reference image, thereby improving stitching efficiency.

### SUMMARY

The invention is set out in the appended set of claims.

Compared with the relevant technology, the present disclosure may provide a method, system, electronic device, and storage medium for producing a panoramic image, according to the sequence number of the image source to be stitched and the stitch rule, the stitch sequence of the panarmic image may be adjusted, during the operation of the panoramic image capturing device, the device may adjust a view angle to improve the experience of the view angle and solve the problem that the physical position of the shot needs to be readjusted when a view angle is changed during the use of other devices in the relevant technology.

### BRIEF DESCRIPTION OF THE DRAWINGS

The present disclosure is further illustrated in terms of exemplary embodiments, and these exemplary embodiments are described in detail with reference to the drawings. These embodiments are not restrictive. In these embodiments, the same number indicates the same structure, wherein:
FIG. 1 is a schematic diagram illustrating an application scenario of a system for producing a panoramic image according to some embodiments of the present disclosure;
FIG. 2 is a block diagram illustrating an exemplary system for producing a panoramic image according to some embodiments of the present disclosure;
FIG. 3 is a flowchart illustrating an exemplary system for producing a panoramic image corresponding to a current processing node according to some embodiments of the present disclosure;
FIG. 4 is a schematic diagram illustrating an exemplary terminal hardware structure for stitching a panoramic image according to some embodiments of the present disclosure;
FIG. 5 is a flowchart illustrating an exemplary process for stitching a panoramic image corresponding to a current processing node according to some embodiments of the present disclosure;
FIG. 6 is a schematic diagram illustrating stitching expansion of a panoramic image according to some embodiments of the present disclosure;
FIG. 7 is a flowchart illustrating another exemplary process for stitching a panoramic image corresponding to a current processing node according to some embodiments of the present disclosure;
FIG. 8 is a flowchart illustrating another exemplary method process for stitching a panoramic image corresponding to a current processing node according to some embodiments of the present disclosure;
FIG. 9 is a schematic diagram illustrating stitching expansion of a restitched panoramic image according to some embodiments of the present disclosure; and
FIG. 10 is a schematic diagram illustrating an exemplary structure of a device for stitching a panoramic image according to some embodiments of the present disclosure.

### DETAILED DESCRIPTION

In order to illustrate the technical solutions related to the embodiments of the present disclosure, brief introduction of the drawings referred to in the description of the embodiments is provided below. Obviously, drawings described below are only some examples or embodiments of the present disclosure. Those having ordinary skills in the art, without further creative efforts, may apply the present disclosure to other similar scenarios according to these drawings. Unless stated otherwise or obvious from the context, the same reference numeral in the drawings refers to the same structure and operation.

It will be understood that the terms "system," "device," "unit," and/or "module" used herein are one method to distinguish different components, elements, parts, sections, or assemblies of different levels in ascending order. However, the terms may be disset by other expressions if they may achieve the same purpose.

As shown in the present disclosure and claims, unless the context clearly indicates exceptions, the words "a," "an," "one," and/or "the" do not specifically refer to the singular, but may also include the plural. The terms "including" and "comprising" only suggest that the steps and elements that have been clearly identified are included, and these steps and elements do not constitute an exclusive list, and the method or device may also include other steps or elements.

A flowchart is used in the present disclosure to illustrate the operation performed by the system according to the embodiment of the present disclosure. It should be understood that the preceding or subsequent operations are not necessarily performed accurately in sequence. Instead, the steps may be processed in reverse order or simultaneously. At the same time, other operations may add to these procedures, or remove one or more operations from these procedures.

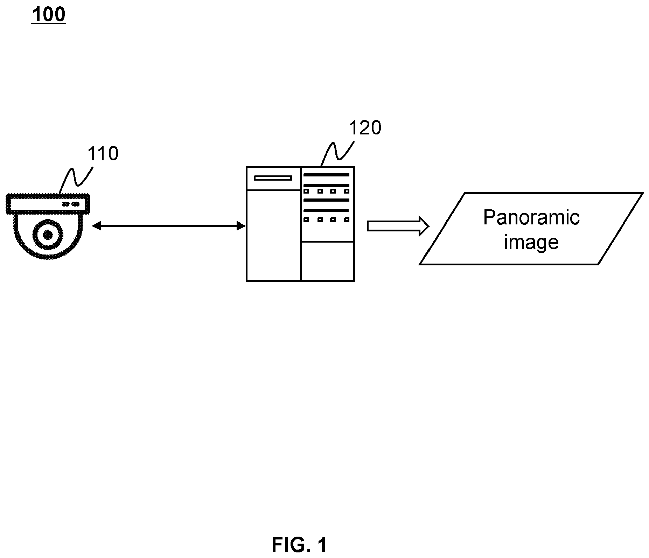

FIG. 1 is a schematic diagram illustrating an application scenario of a system for producing a panoramic image according to some embodiments of the present disclosure. An application scenario 100 may refer to various scenarios related to producing the panoramic image, such as video monitoring or terminal camera shooting in airports, viaducts, docks, restaurants, shopping malls, and other places.

The scenario 100 may include an imaging device 110 and a processing device 120.

The imaging device 110 may be various devices capable of imaging, such as an imaging sensor, various types of cameras, movable terminal, etc. The imaging device 110 may realize multiple imaging shots, wherein the multiple imaging shots may include multiple imaging shots at multiple time points respectively, multiple imaging shots at multiple perspectives respectively, multiple imaging shots by the plurality of cameras (e.g., the imaging device 110 may include the plurality of cameras, and the plurality of cameras may be installed in turn for shooting in multiple directions/perspectives) respectively, or any multiple imaging shots used to produce the panoramic image.

The processing device 120 may include one or more processing sub-devices. In some embodiments, the processing device 120 may include various types of processing devices, systems, platforms, or any combination thereof. The processing device 120 may obtain data from other devices and calculate and process the data.

In some embodiments, the processing device 120 may obtain a plurality of images to be stitched by multiple imaging shots (e.g., multiple imaging shots may be performed by the imaging device 110). In some embodiments, the processing device 120 may determine a target image to be stitched from the plurality of images to be stitched. In some embodiments, the processing device 120 may determine a stitch sequence of the plurality of images to be stitched, wherein the target image to be stitched may be placed at a preset stitch position and an adjacence relationship of the plurality of images to be stitched in the stitch sequence may correspond to an adjacence relationship of the multiple imaging shots. In some embodiments, the processing device 120 may obtain the panoramic image by stitching the plurality of images to be stitched according to the stitch sequence.

The information transfer between components of the above scenario 100 may be illustrated merely as an example, which may not be limited in the present disclosure.

It should be noted that the application scenario is provided for illustrative purposes only and is not intended to limit the scope of the present disclosure. For those skilled in the art, many changes and modifications can be made under the guidance of the content of the present disclosure. The features, structures, methods, and other features of the exemplary embodiments described herein may be combined in various ways to obtain additional and/or alternative exemplary embodiments. For example, the scenario 100 may further include a storage device. As another example, the scenario 100 may be implemented on other devices to achieve similar or different functions. However, these changes and modifications may not deviate from the scope of the present disclosure.

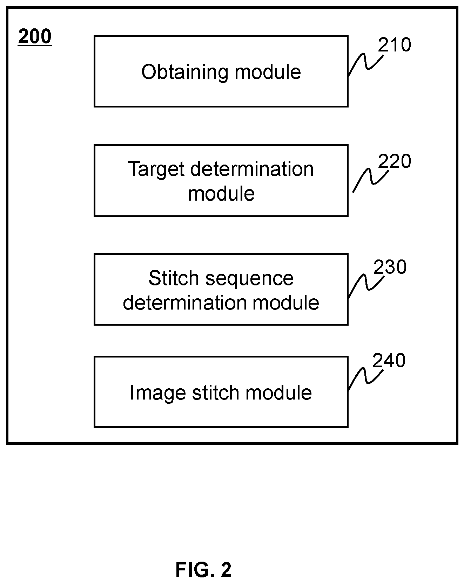

FIG. 2 is a block diagram illustrating an exemplary system for producing a panoramic image according to some embodiments of the present disclosure. A panoramic image producing system 200 may be implemented on the processing device 120.

As shown in FIG 2, the system 200 may include an obtaining module 210, a target determination module 220, a stitch sequence determination module 230, and an image stitch module 240.

In some embodiments, the obtaining module 210 may be configured to obtain the plurality of images to be stitched. In some embodiments, the obtaining module 21 may be further configured to obtain a sample panoramic image stitched by a plurality of sample images, the plurality of sample images being captured by the plurality of cameras corresponding to the multiple imaging shots, each of the plurality of sample images being captured in a single imaging shot by a corresponding camera of the plurality of cameras.

In some embodiments, the target determination module 220 may be configured to determine a target image to be stitched. In some embodiments, the target determination module 220 may be configured to determine a target imaging shot from the multiple imaging shots according to imaging situation(s) of the multiple imaging shots. In some embodiments, the target determination module 220 may be configured to determine a target image to be stitched from the plurality of images to be stitched.

In some embodiments, the stitch sequence determination module 230 may be configured to determine a stitch sequence of the plurality of images to be stitched, wherein the target image to be stitched may be placed at a preset stitch position and an adjacence relationship of the plurality of images to be stitched in the stitch sequence may correspond to an adjacence relationship of the multiple imaging shots.

In some embodiments, the image stitch module 240 may be configured to obtain the panoramic image by stitching the plurality of images to be stitched according to the stitch sequence.

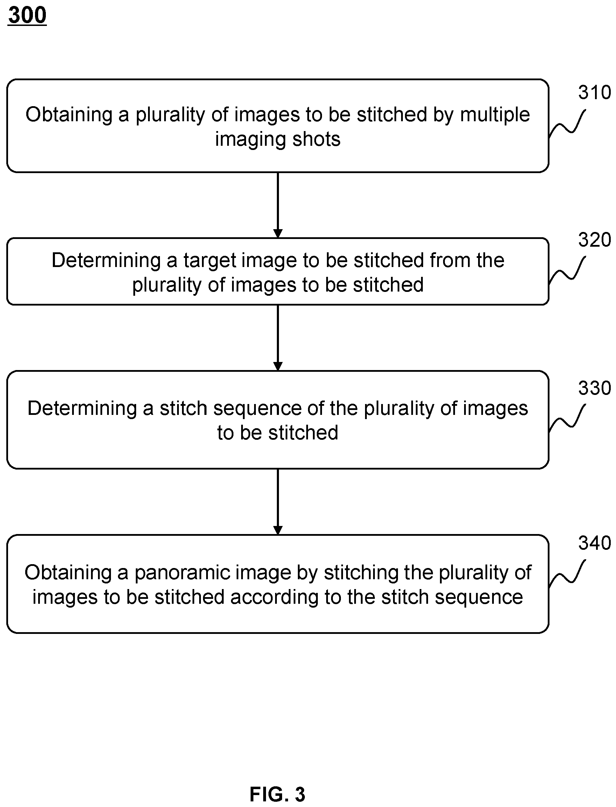

More descriptions of modules of the system shown above may be found in the descriptions of flowchart in the present disclosure, such as FIG. 3 and the related descriptions.

It should be understood that the system and its modules shown in FIG. 2 can be implemented in various ways. For example, in some embodiments, the system and its modules may be implemented by hardware, software, or a combination of software and hardware. The hardware part can be realized by special logic; the software part can be stored in the memory and executed by an appropriate instruction execution system, such as a microprocessor or specially designed hardware. Those skilled in the art can understand that the above methods and systems can be implemented using computer executable instructions and/or included in processing device control codes, such as providing such codes on a carrier medium such as a disk, CD or DVD-ROM, a programmable memory such as a read-only memory (firmware), or a data carrier such as an optical or electronic signal carrier. The system and its modules in this specification can not only be implemented by hardware circuits such as VLSI or gate arrays, semiconductors such as logic chips and transistors, or programmable hardware devices such as field programmable gate arrays and programmable logic devices, or be implemented by software executed by various types of processing devices, for example, or by a combination of the above described hardware circuits and software (e. g., firmware).

It should be noted that the panoramic image producing system and its modules is provided for illustrative purposes only and is not intended to limit the scope of the present disclosure. For those skilled in the art, many changes and modifications can be made under the guidance of the content of the present disclosure. The features, structures, methods, and other features of the exemplary embodiments described herein may be combined in various ways to obtain additional and/or alternative exemplary embodiments. For example, in some embodiments, the obtaining module 210 and the target determination module 220 may be different modules in a system, or a single module that realizes the functions of two or more of the above modules. For example, each module can share an enclosure, and each module can also have its own enclosure. Such deformation is within the protection scope of this manual.

FIG. 3 is a flowchart illustrating an exemplary system for producing a panoramic image corresponding to a current processing node according to some embodiments of the present disclosure. In some embodiments, one or more operations in process 300 shown in FIG. 3 may be implemented in the panoramic image producing system 200. For example, the process 300 shown in FIG. 3 may be stored in the storage medium in the form of instructions and called and/or executed by the processing device 120. In some embodiments, the process 300 shown in FIG. 3 may be executed by the processor402. Merely for example, in the following descriptions, the processing device 120 may be taken as an example to perform the process 300.

As shown in FIG. 3, the process 300 may include one or more of the following operations.

In 310, the processing device may obtain a plurality of images to be stitched by multiple imaging shots.

In some embodiments, an image obtained by each imaging shot of the multiple imaging shots may refer to an image to be stitched, and the multiple imaging shots may correspond to the plurality of images to be stitched. For example, eight images to be stitched P₁, P₂, P₃, P₄, P₅, P₆, P₇, and P₈ (in which a subscript of an image represents an imaging serial number corresponding to the image, for example, 1 represents a first imaging shot) may be obtained by eight imaging shots. The eight images may be stitched through the subsequent processes to obtain the panoramic image (e.g., 360° panoramic image).

In 320, the processing device may determine a target image to be stitched from the plurality of images to be stitched.

A target image determined from the plurality of images to be stitched may refer to the target image to be stitched.

In some embodiments, the processing device may determine a target imaging shot from the multiple imaging shots according to the imaging situation(s) of the multiple imaging shots, and determine an image obtained by the target imaging shot as the target image to be stitched.

An imaging situation may include imaging quality, imaging priority, and/or one or more other indicators that reflect the imaging situation.

In some embodiments, the imaging quality may reflect the situation of the subject (e.g., whether the subject is blocked or a degree of the blocking), image definition (e.g., an image definition level), and/or other situations related to the imaging quality. In some embodiments, the imaging quality may include or be indicated by a count of moving subjects captured by the camera during the operation, such as a count of moving subjects captured by the camera once or multiple times within a preset time period (e.g., the count of moving subjects captured in one shot or the count of moving subjects within a preset time period captured in multiple shots). The preset time period may be a time period such as 12 hours, 24 hours, etc. The preset time period and the count of shots may be set according to practical requirements. In some embodiments, the processing device may identify the moving subject captured by the camera by various existing moving subject detection techniques.

In some embodiments, the imaging priority may reflect an imaging priority/importance. For example, the priority may be 1, 2, 3, etc., or the priority may be high, medium, low, etc.

In some embodiments, the processing device may determine a manner for obtaining the imaging quality, according to required imaging quality indicators, and further obtain the imaging quality of each imaging shot. The imaging quality indicators may be obtained by various available methods.

In some embodiments, the imaging situation such as the imaging quality, the imaging priority, etc., in the multiple imaging shots may be preset according to actual situations or requirements.

In some embodiment, the imaging quality may further include imaging quality of a target subject (also referred to as a target imaging quality). The target subject may include scenery, people, food, building, vehicle, etc.

In some embodiments, for an imaging shot, the determination of the target imaging quality may include: identifying the subject(s) in the image captured by the imaging shot (e.g., performing the target identification on the image by target identification manner(s) such as the YOLO model) to obtain the identified subject(s), type(s) of the identified subject(s), and/or subject region(s); determining a ratio of the subject(s) in the image (e.g., if the identified subject(s) include the target subject, the ratio of a region corresponding to the target subject in the image may be calculated; as another example, if the identified subject(s) do not include the target subject, the ratio of the target subject in the image may be determined as 0); and determinining the target imaging quality (e.g., the higher the ratio of the target subject is, the better the target imaging quality).

In some embodiments, the processing device may determine a rank of the imaging situations of the multiple imaging shots (e.g., a rank from bad to good or from good to bad), determine a worst imaging situation based on the rank of the imaging situations, and/or compare the imaging situations of the multiple imaging shots.

In some embodiments, an imaging shot with an imaging situation that satisfies a preset condition in the multiple imaging shots is determined as the target imaging shot. The imaging shot with the worst imaging situation may refer that the subject blocking is most serious, the image definition is worst, the imaging priority is lowest, etc.

In 330, the processing device may determine a stitch sequence of the plurality of images to be stitched.

In some embodiments, in the determination of the stitch sequence, the target image to be stitched may be placed at a preset stitch position such that an adjacence relationship of the plurality of images to be stitched in the stitch sequence corresponds to an adjacence relationship of the multiple imaging shots. The preset stitch position may be a header stitch position or an end stitch position of the stitch sequence. The adjacence relationship of the plurality of images to be stitched in the multiple imaging shots may include or be referred to as an adjacence relationship of multiple time points, an adjacence relationship of multiple perspectives, an adjacence relationship of the plurality of cameras, etc.

Taking the eight images to be stitched P₁, P₂, P₃, P₄, P₅, P₆, P₇, and P₈ obtained by the eight imaging shots as an example, if P₄ is the target image to be stitched, P₄ may be placed at the header stitch position to obtain a stitch sequence of P₄, P₅, P₆, P₇, P₈, P₁, P₂, and P₃ (referred to as a stitch sequence 1), or P₄ may be set at the end stitch position to obtain a stitch sequence of P₅, P₆, P₇, P₈, P₁, P₂, P₃, P₄ (referred to as a stitch sequence 2).

In some embodiments, in the determination of the stitch sequence, an image to be stitched that is captured in an imaging shot with a relatively good imaging situation (e.g., the imaging quality is relatively good/the priority is relatively high) may be placed at a middle stitch position.

Taking the eight images to be stitched P₁, P₂, P₃, P₄, P₅, P₆, P₇, and P₈ obtained by the eight imaging shots as an example, P₄ may be placed at the header stitch position or the end stitch position to obtain two candidate stitch sequences (i.e., the stitch sequence 1, the stitch sequence 2). The imaging situation(s) of the imaging shot(s) that capture the image(s) to be stitched (which are placed at the middle stitch position(s) in the candidate stitch sequences (e.g., the images to be stitched corresponding to the middle stitch positions of the stitch sequence 1 and the stitch sequence 2 may be (P₇, P₈) and (P₇, P₁), respectively)) may be determined. A candidate stitch sequence with a relatively good imaging situation corresponding to the middle stitch position may be designated as a target stitch sequence to be used in subsequent processing(s).

In 340, the processing device may obtain a panoramic image by stitching the plurality of images to be stitched according to the stitch sequence.

In some embodiments, the processing device may obtain the panoramic image by stitching the plurality of images to be stitched according to the stitch sequence (e.g., the target stitch sequence) using various available image stitch algorithms.

In some embodiments, for any two images to be stitched, the used image stitch algorithms may include image feature points extraction and matching, image registration, image fusion, etc.

In some embodiments, the image feature points extraction and matching may include: extracting the image feature points, determining a match point set (including similar point pairs, i.e., overlapping pairs of points in the two images) of the two images to be stitched based on the image feature points. The image feature point extraction and matching may be implemented through various existing available manners.

In some embodiments, the image registration may include: realizing the image registration by converting the two images to be stitched into a same coordinate according to the match point set of the two images to be stitched. The image registration may be implemented through various existing available manners.

In some embodiments, the image fusion may include: copying one image to be stitched to another one image to be stitched (referred to as a registered image) (i.e., overlaying to the registered image), and performing the fusion. Using the fusion operation, an image to be stitched with natural transition may be obtained by performing a weighted summation on pixel values of the overlapping region of the two images (in which each image to be stitched may correspond to a weight).

In some embodiments, during the image fusion, the image to be stitched with a relatively low imaging quality may be designated as the registered image.

In some embodiments, the processing device may determine the weight(s) based on the imaging quality of the two images to be stitched (e.g., the target imaging quality). In some embodiments, during the weighted summation, the weight corresponding to the image to be stitched may be proportional to the image quality of the image to be stitched, i.e., the higher the imaging quality of the image to be stitched, the higher corresponding weight. For example, the weighted composition may be determined as $p = {p}_{1} ∗ a ∗ \left(\frac{c 1}{c 1}+c2\right) + {p}_{2} ∗ b ∗ \left(\frac{c 2}{c 1}+c2\right)$, *p*₁ and *p*₂ may be pixel values of a certain pixel in the image to be stitched *p*₁ and image to be stitched *p*₂, *p* may be a fused pixel value, *a* and *b* may be weights of the pixel in the *p*₁ and *p*₂ obtained according to various existing weight calculation manners (e.g., the weight determined according to a distance between the pixel and the overlapping region boundary), *c*1 and *c*2 may be imaging quality scores corresponding to *p*₁ and *p*₂, respectively.

In some embodiments, the multiple imaging shots may refer to performing the imaging shots by the plurality of cameras (e.g., the plurality of cameras may install respectively to shoot from the multiple perspectives, and the plurality of cameras may form a panoramic camera), respectively, i.e., each imaging shot may correspond to a camera.

In some embodiments, when performing panoramic imaging shots continuously through the plurality of cameras (e.g., the panoramic imaging shots in monitoring and other scenes), the imaging situation of the plurality of cameras such as the imaging quality may be detected dynamically/periodically during the operation of the plurality of cameras, and the stitch sequence may be adjusted dynamically according to the manner of the operations 310-330. The following takes the imaging quality including a count of the moving subjects captured by the camera during the operation (e.g., the count of moving subjects captured by the camera once or multiple times within a preset time period) as an example, how to the imaging quality of each camera of the plurality of cameras may be detected in the operation.

In some embodiments, the count of moving subjects captured by the camera within the preset time period may be determined according to one or more of the following operations. The processing device may obtain a plurality of images captured in a single imaging shot by the plurality of cameras (corresponding to the multiple imaging shots, in which the plurality of cameras may form a panoramic camera), and obtain a panoramic image by stitching the plurality of images, the panoramic image may be used as a sample panoramic image. The processing device may determine a pixel position (e.g., a pixel position of the moving subject in a stitch direction of the sample panoramic image) of each moving subject of the plurality of moving subjects in the sample panoramic image and further determine a camera that captures the each moving subject, based on the pixel position of the each moving subject and a size of the sample panoramic image (e.g., an image width/resolution width of the sample panoramic image). Further, the processing device may determine the count of moving subjects captured in this shot by each of the plurality of cameras based on the camera(s) that captures each moving subject.

It should be noted that, in the above manners, the sample panoramic image may be obtained by stitching the plurality of images through an initial stitch sequence or a stitch sequence predetermined (e.g., determined by the above operation 310-330) during the operation of the plurality of cameras. The initial stitch sequence may be preset, for example, the plurality of cameras A₁, A₂......Aₙ may be designated as the initial stitch sequence of the corresponding images P₁, P₂......Pₙ, i.e., the initial stitch sequence may be P₁, P₂......Pₙ.

In some embodiments, the processing device may identify the moving subjects captured by the camera (e.g., the panoramic camera) through various existing moving subject detection algorithms.

In some embodiments, for each moving subject: the processing device may determine the camera that captures the each moving subject based on a quotient of a target sum value divided by a count of the plurality of cameras, wherein the target sum value is a sum of the count of plurality of cameras and a quotient of the pixel position of the each moving subject divided by the size of the sample panoramic image.

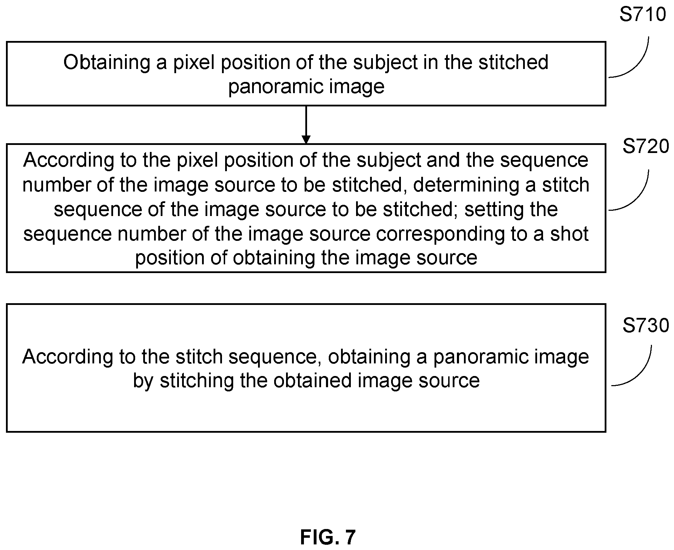

More descriptions of determining the count of moving subjects being captured in a single imaging shot and adjusting the stitch sequence dynamically may be found in FIGs. 7-9 and the related descriptions.

In different parts of the present disclosure, the process of producing the panoramic image may also be referred to as the process of stitching the panoramic image, and the image to be stitched may also be referred to as the image source.

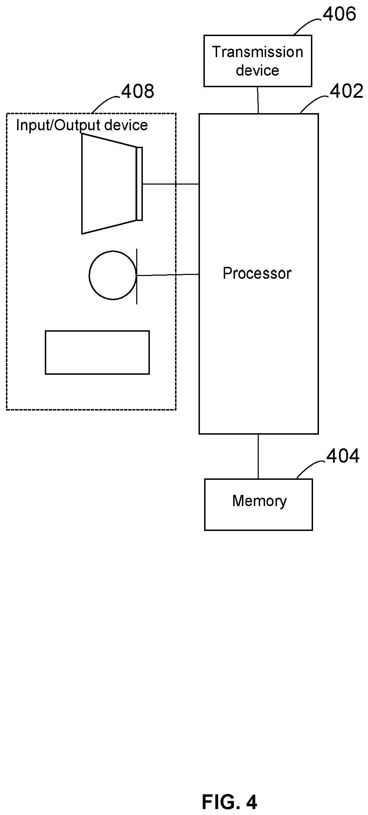

The following contents (FIGs. 4-10) may include specific descriptions of the process of producing the panoramic image.

The embodiments provided in the present disclosure may be executed in computing device(s) such as terminal, computer, etc. FIG. 4 is a schematic diagram illustrating an exemplary terminal hardware structure for stitching a panoramic image according to some embodiments of the present disclosure. As shown in FIG. 4, the terminal may include one or more processors 402 (FIG. 4 only shows one processor) and a memory 404 used to store data, wherein the processor 402 may include but is not limited to the processing device(s) such as microprocessor MCU or programmable logic device FPGA. The terminal may further include a transmission device 406 used to communicate and an input and output device 408. Those skilled in the art may understand that the structure in FIG. 4 is for illustration only, and does not limit the structure of the above terminal. For example, the terminal may further include more or less components compared with the components as shown in FIG. 4, or has different configurations with the configuration as shown in FIG. 4.

The memory 404 may be used to store computer program such as software program of the applicant software and modules, computer program corresponding to the process of stitching the panoramic image in the embodiments, computer program stored in the memory 404 by the processor 402 during the operation, to implement the above processes. The memory 404 may include a high-speed random access memory, and may further include a non-volatile memory, such as one or more magnetic storage devices, flash memory, or other non-volatile solid-state memory. In some embodiments, the memory 404 may further include memories set remotely relative to the processor 402. Theses remote memories may connect to the terminal via the network. The embodiments of the network may include but is not limited to Internet, Intranet, LAN, Mobile Communication Network, or any combination thereof.

The transmission device 406 may be used to receive or transmit data via network. The network may include a Wireless network provided by the communication supplier of the terminal. In some embodiments, the transmission device 406 may include a Network Interface Controller (NIC), which may be connected with other network devices based on a based station to communicate with the internet. In some embodiments, the transmission device 406 may be a radio frequency module used to communicate with the internet via wireless mode.

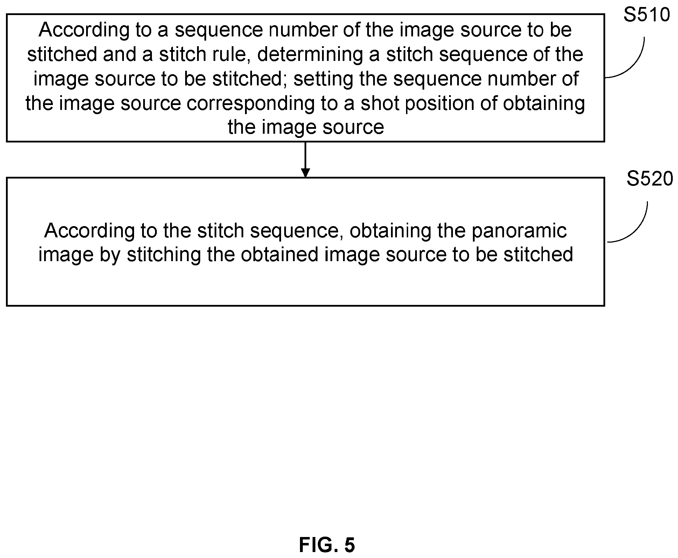

The embodiments provide a method for stitching the panoramic image, the method may be applied to a panoramic image capturing device, the panoramic image capturing device may include a plurality of cameras and a control unit, the plurality of cameras may be used to obtain image source(s) used to stitch the panoramic image, and the control unit may be used to perform the panoramic image stitch operation in the embodiments. FIG. 5 is a flowchart illustrating an exemplary process for stitching a panoramic image corresponding to a current processing node according to some embodiments of the present disclosure. As shown in FIG. 5, the process may include one or more of the following operations.

In S510, according to sequence number(s) of the image source to be stitched and a stitch rule, a stitch sequence of the image source to be stitched may be determined; the sequence number(s) of the image source may be set correspondingly to the position(s) of the camera(s) that capture the image source.

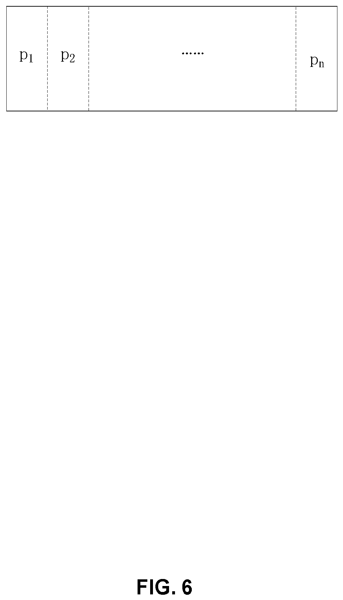

Specifically, the control unit may determine the stitch sequence of the image source to be stitched according to the sequence number(s) of the image source to be stitched and the stitch rule, and the sequence number(s) of the image source may be set corresponding to the position(s) of the camera(s) that capture the image source. Merely for example, the stitch rule may be a stitch rule determined according to priority corresponding to the image source, a stitch rule determined according to the image information of the image source, or a stitch rule determined according to the pixel position of the moving subject in the stitched panoramic image. The panoramic image capturing device may obtain the image sources using n cameras, the n cameras may be numbered as A₁, A₂......Aₙ according to the positions of the cameras, the sequence number(s) of the image source collected by the n cameras may be P₁, P₂......Pₙ, respectively, i.e., the sequence number of the image source collected by the camera Aₙ may be Pₙ. The panoramic image capturing device may stitch the plurality of image sources into a 360° panoramic image and output the 360° panoramic image. An expansion diagram of the panoramic image may be shown in FIG. 6. FIG. 6 is a schematic diagram illustrating stitching expansion of a panoramic image according to some embodiments of the present disclosure. Taking the 360° panoramic image stitched by the n cameras as an example, a normal stitch sequence of the image source from left to right may be P₁, P₂......Pₙ. For example, according to the stitch rule, the image source collected by the camera A₂ may be placed on the leftmost position and other image sources collected by other cameras may be stitched according to the sequence, and the adjusted stitch sequence of the image source from left to right may be P₂, P₃......Pₙ, P₁.

In S520, according to the stitch sequence, a panoramic image may be obtained by stitching the obtained image source to be stitched.

Specifically, the control unit may obtain the panoramic image by stitching the newly obtained image source to be stitched according to the stitch sequence of the image source to be stitched determined by the operation S510. The newly obtained image source to be stitched may be an image source to be stitched collected by the cameras in the next sample period after obtaining an updated stitch sequence.

In some embodiments, according to the image source sequence and the stitch rule, the stitch sequence of the panoramic image may be adjusted. During the usage of the panoramic image capturing device, a view angle of the carmera may be adjusted to improve the visual effect and solve the problem that the physical position of the camera needs to be readjusted when a view angle is changed during the use of other devices in the relevant technology.

In some embodiments, according to the priority of the position(s) of the camera(s) that capture the image source and the sequence number(s) of the image source(s) to be stitched, the stitch sequence of the image source(s) to be stitched may be determined. Specifically, the priority herein may be custom or may be determined by the quality of the image source(s). Merely for example, if the panoramic image capturing device obtains the image sources using 8 cameras, the sequence number of the 8 cameras may be A₁, A₂......A₈ according to the positions of the cameras, and the priorities defined by user(s) may include the highest priority for the cameras A₁ and A₂, followed by the priority of the cameras A₃ and A₄, and the lowest priority for the cameras A₅ and A₆, and the stitch sequence of the image sources to be stitched may be P₅, P₇, P₃, P₁, P₂, P₄, P₈, P₆.

In some embodiments, according to the image information of the image sources to be stitched and the sequence number of the image sources to be stitched, the stitch sequence of the image sources to be stitched may be determined. Specifically, if target subjects of interest (e.g., human body, vehicle, etc.) are detected in the image sources, the image sources may be adjusted to the middle, or if subject(s) are blocked in the image sources, the image source(s) may be adjusted to the edge. Merely for example, the panoramic image capturing device may obtain the image sources using 8 cameras, if it is detected that subject(s) captured by the camera A₃ is blocked, the image source corresponding to camera A₃ may be adjusted to the left edge or the right edge, and the stitch sequence of the image sources to be stitched may be P₃, P₄, P₅, P₆, P₇, P₈, P₁, P_{2.}

Another exemplary process for stitching the panoramic image may be applied to the panoramic image capturing device that includes a plurality of cameras and a control unit, the plurality of cameras may be used to obtain the image sources configured to stitch the panoramic image, and the control unit may be used to implement the panoramic image stitch operation. FIG. 7 is a flowchart illustrating another exemplary process for stitching a panoramic image according to some embodiments of the present disclosure. As shown in FIG. 7, the process may include the following operation:

In S710, a pixel position of the moving subject in the stitched panoramic image may be obtained.

Specifically, the control unit may obtain the stitched panoramic image, identify the moving subjects in the image by utilizing the image identification algorithms, and calculate the pixel position of the moving subject in the image. Optionally, the stitched panoramic image may be a panoramic image obtained by stitching the image sources obtained by the cameras according to the current stitch sequence of the image sources.

In S720, according to the pixel position of the subject and the sequence numbers of the image sources to be stitched, a stitch sequence of the image sources to be stitched may be determined; the sequence numbers of the image sources may be set corresponding to the positions of the cameras that capture the image sources.

Specifically, the control unit may determine the stitch sequence of the image sources to be stitched according to the pixel position(s) of the subject(s) and the sequence numbers of the image sources to be stitched obtained by operation S710. The stitch sequence of the image sources to be stitched determined herein may be an updated stitch sequence of the image sources. The updated stitch sequence of the image sources may be the same as the current stitch sequence or different from the current stitch sequence. The control unit may determine the sequence number(s) of the image source(s) in which the moving subject(s) in detected according to the pixel position(s) of the subject(s), and further determine a count of moving subjects in each of the image sources. The control unit may determine the image source with the least number of the moving subjects according to the count of moving subjects in each of the image sources, and determine the stitch sequence of the image sources to be stitched according to the sequence number corresponding to the image source with the least count of moving subjects and the sequence number corresponding to other image sources. In some embodiments, the sequence number corresponding to the image source with the least count of moving subjects may be set at a header position or an end position of the stitch sequence, other positions of the stitch sequence may be set according to the sequence numbers corresponding to other image sources to adjust the stitch sequence of the panoramic image. In some embodiments, video images with relatively low activity may be stitched to the edge (of the panoramic image) by adjusting the view angle automatically during the operation of the panoramic image capturing device to improve the visual effect. In addition, the sequence number(s) of the image source(s) may be set correspondingly to the position(s) of the camera(s) that capture the image source(s). Merely for example, the image sources may be obtained using the n cameras, the n cameras may be numbered as A₁, A₂......Aₙ according to the positions of the cameras, sequence numbers of the image sources collected by the n cameras may be P₁, P₂, ..., Pₙ, respectively, i.e., the sequence number of the image source collected by the camera Aₙ may be Pₙ.

In S730, according to the stitch sequence, a panoramic image may be obtained by stitching the obtained image sources.

Specifically, the control unit may obtain the panoramic image by stitching the obtained image sources according to the stitch sequence of the image sources to be stitched determined by operation S730. The newly obtained image sources to be stitched may be the image sources to be stitched collected in the next sample period after obtaining the updated stitch sequence.

In some embodiments, according to the pixel position of the moving subject(s) and the sequence number(s) of the image source(s), the stitch sequence of the panoramic image may be adjusted. During the operation of the panoramic image capturing device, a view angle of the camera may be adjusted to improve the visual effect and solve the problem that the physical position(s) of the camera(s) need to be readjusted when the view angle is changed during the use of other devices in the relevant technology.

In some embodiments, according to a width of the stitched panoramic image, the pixel position(s) of the subject(s), and/or the count of image sources, the sequence number(s) of the image source(s) in which the moving subject(s) are detected may be determined.

Specifically, according to the equation $p = \left(\frac{x}{w}+n\right) % n$, the sequence number(s) of the image source(s) in which the moving subject(s) are detected may be determined. *p* represents the sequence number of an image source in which a moving subject is detected, *x* represents the pixel position of the subject, *w* represents a width of the stitched panoramic image, *n* represents the count of the image sources. Merely for example, the *x* herein may be a pixel coordinate of the subject, and *w* may represent a resolution of the stitched panoramic image.

In some embodiments, according to the pixel position(s) of the subject(s) and the sequence number(s) of the image source(s) to be stitched, the determining the stitch sequence of the image sources to be stitched may include one or more of the following operations. According to the sequence number(s) of the image source(s) in which the moving subject(s) are detected, the count of moving subjects in each of the image sources may be determined. According to the count of moving subjects in each of the image sources and the sequence numbers of the image sources to be stitched, the stitch sequence of the image sources to be stitched may be determined.

In some embodiments, according to the count of moving subjects in each of the image sources and the sequence numbers of the image sources to be stitched, the stitch sequence of the image sources to be stitched may be determined by one or more of the following operations. According to the count of the moving subjects in each of the image sources, the image source(s) with the least count of moving subject(s) may be determined. According to the sequence number(s) corresponding to the image source(s) with the least count of moving subject(s) and the sequence number(s) corresponding to other image source(s), the stitch sequence of the image sources to be stitched may be determined.

In some embodiments, according to the sequence number(s) corresponding to the image source(s) with the least count of moving subject(s) and the sequence number(s) corresponding to other image source(s), the stitch sequence of the image sources to be stitched may be determined by one or more of the following operations. The sequence number(s) corresponding to the image source(s) with the least count of moving subject(s) may be set at the header position or the end position of the stitch sequence, other position(s) of the stitch sequence may be set according to the image sequence number(s) corresponding to other image source(s).

Specifically, the control unit may place the sequence number(s) corresponding to the image source(s) with the least count of moving subject(s) at the header position or the end position of the stitch sequence, and other position(s) of the stitch sequence may be set according to the sequence number(s) corresponding to other image source(s). Merely for example, the panoramic image may obtain the image sources using n cameras, the n cameras may be numbered as A₁, A₂......Aₙ according to the positions of the cameras, sequence numbers of the image sources collected by the n cameras may be P₁, P₂......Pₙ, respectively, i.e., the sequence numbers of the image sources collected by the camera Aₙ may be Pₙ. An exemplary image source stitch sequence may be P₁, P₂......Pₙ; if the sequence number corresponding to the image source with the least count of moving subjects is Pᵢ, the determined stitch sequence of the image sources to be stitched may be Pᵢ, Pᵢ₊₁, Pᵢ₊₂......Pₙ, P₁, P₂......Pᵢ₋₁.

In some embodiments, according to the count of moving subjects in the image source, the sequence number corresponding to the image source with the least count of moving subjects may be set at the header position or the end position of the stitch sequence, other positions of the stitch sequence may be set according to the sequence numbers corresponding to other image sources to adjust the stitch sequence of the panoramic image. During the operation of the panoramic image capturing device, a view angle may be adjusted to improve the visual effect and solve the problem that the physical position(s) of the camera(s) need to be readjusted when a view angle is changed during the use of other devices in the relevant technology.

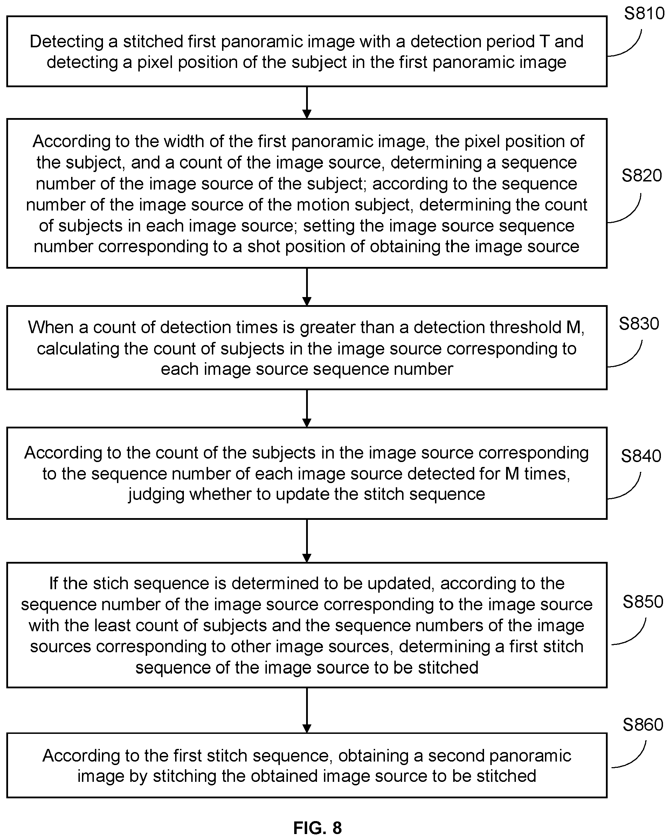

The panoramic image stitch method may be applied to the panoramic image capturing device that includes a plurality of cameras and a control unit. The plurality of cameras may be used to obtain the image sources to be stitched to obtain the panoramic image. The control unit may be used to perform the panoramic image stitch method in the embodiments. FIG. 8 is a flowchart illustrating another exemplary process for stitching a panoramic image corresponding to a current processing node according to some embodiments of the present disclosure. As shown in FIG. 8, the process may include one or more of the following operations.

In S810, a stitched first panoramic image may be detected with a detection period T. In some embodiments, and pixel position(s) of the moving subject(s) in the first panoramic image may be detected.

Specifically, the control unit may detect the stitched first panoramic image with the detection period T, and the pixel position(s) of the moving subject(s) in the first panoramic image may be detected. Merely for example, the detection period T may be greater than the stitch period of the stitched first panoramic image, i.e., the first panoramic image may be an image stitched by the image sources captured by the cameras at different times.

In S820, according to a width of the first panoramic image, the pixel position(s) of the subject(s), a count of the image source(s), sequence number(s) of the image source(s) of the moving subject(s) may be determined. According to the sequence number(s) of the image source(s) of the moving subject(s), the count of the moving subjects in each of the image sources may be determined. The sequence number(s) of the image source(s) may be set corresponding to the position(s) of the camera(s) that capture the image source(s).

Specifically, according to the equation *p =* (*x*/*w + n*)%*n,* the sequence number(s) of the image source(s) in which the moving subject(s) are detected may be determined. *p* represents the sequence number of an image source in which a moving subject is detected, *x* represents the pixel position of the subject, *w* represents a width of the first panoramic image, *n* represents the count of the image sources. Merely for example, the *x* herein may be a pixel coordinate of the subject, and w represents a resolution of the first panoramic image. In addition, the sequence number(s) of the image source(s) may be set corresponding to the position(s) of the camera(s) that capture the image source(s). Merely for example, the panoramic image capturing device may obtain the image sources using n cameras, the n cameras may be numbered as A₁, A₂......Aₙ according to the positions of the cameras, sequence numbers of the image sources collected by the n cameras may be P₁, P₂......Pₙ, respectively, i.e., the sequence number of the image source collected by the shot Aₙ may be Pₙ.

In S830, if a count of detection times is greater than a detection threshold M, the count of moving subjects in an image source corresponding to each sequence number may be calculated.

Specifically, the control unit may detect the count of moving subjects in the image source by detecting the first panoramic image with the detection period T. If the count of detection times is greater than the detection threshold M, the count of the moving subjects in the image source corresponding to the sequence number of each detected image may be added to obtain the count of moving subjects in the image source corresponding to each sequence number in M detections.

In S840, according to the count of the moving subjects in the image source corresponding to each sequence number in M detections, whether to update the stitch sequence may be determined. If the stitch sequence needs to be updated, the operation S850 may be performed.

Specifically, the control unit may determine whether to update the stitch sequence according to the count of moving subjects in the image source corresponding to each sequence number in operation S830. Merely for example, the control unit may determine whether to update the stitch sequence according to whether the count of moving subjects in the image source(s) at the edge portion of the existing stitch sequence is minimum, or whether the count of moving subjects in the image source(s) at the central portion of the existing stitch sequence is maximum.

In S850, according to the sequence number of the image source corresponding to the image source with the least count of moving subjects and the sequence numbers of the image sources corresponding to other image sources, a first stitch sequence of the image sources to be stitched may be determined.

Specifically, the sequence number of the image source corresponding to the image source with the least count of moving subjects may be set at the header position or the end position of the stitch sequence, other positions of the stitch sequence may be set according to the sequence numbers corresponding to other image sources.

In S860, according to the first stitch sequence, a second panoramic image may be obtained by stitching the obtained image sources to be stitched.

Specifically, the control unit may obtain the second panoramic image by stitching the newly obtained image sources to be stitched according to the first sequence of the image sources to be stitched determined by the operation S850. The newly obtained image sources to be stitched herein may be image sources collected by the imaging shots in the next sample period after obtaining the first stitch sequence.

In some embodiments, according to the count of moving subjects in the image source, the sequence number of the image source corresponding to the image source with the least count of moving subjects may be set at the header position or the end position of the stitch sequence, other positions of the stitch sequence may be set according to the sequence numbers corresponding to other image sources to adjust the stitch sequence of the panoramic image. During the operation of the panoramic image capturing device, the device may adjust a view angle to improve the visual effect and solve the problem that the physical position of the cameras need to be readjusted when a view angle is changed during the use of other devices in the relevant technology.

In some embodiments, a panoramic stitch method may include one or more of the following operations.

In S801, pixel position(s) of the subject(s) may be detected using a moving subject detection algorithm with a time period t during the operation of the device, and the pixel position(s) of the subject(s) may be transmitted to a moving subject distribution statistics module.

In S802, after receiving a detection result from the moving subject distribution statistics module, a count of subjects detected by each camera may be calculated according to the pixel position(s) of the subject(s) and a stitch sequence. A manner of determining the camera that captures the subject is as follows: *p =* (*x*/*witch + n*)%*n. n* represents a count of cameras, *witch* represents a resolution of a stitched image, *x* represents a coordinate of the subject, *p* represents the sequence number of camera that captures the subject.

In S803, a count of subjects captured by one camera may accumulate according to a result of each sampling. When the count of sampling times reaches a preset threshold m, the moving subject distribution statistics module may transmit a statistical result captured by each camera to a stitch module, and the stitch module may determine whether to adjust the stitch sequence.

In S804, the stitch module may sort the cameras according to a total number of subjects captured by each camera and set a camera with the least count of subjects on the edge of the image.

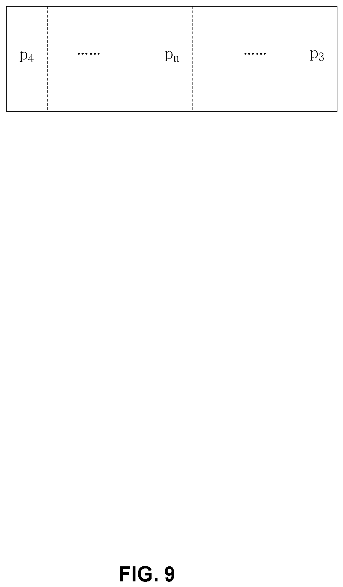

The device may stitch the images captured by the plurality of cameras into a 360° panoramic image. An expansion diagram of the panoramic image may be shown in FIG. 6. Taking stitching the n images into the 360° panoramic image as an example, if the fourth camera detectes the subject(s) are blocked, the image captured by the fourth camera may be set on the edge of the panoramic image and restitch the panoramic image to improve overall visual effect. The camera arrangement in the restitched image may be shown in FIG. 9. FIG. 9 is a schematic diagram illustrating stitching expansion of a restitched panoramic image according to some embodiments of the present disclosure.

The overall stitch sequence may be determined by referring to determining a stitch position of any image as shown in FIG. 9, a sequence number of the leftmost image in stitching may be calculated according to the following manner: *q = p*%*n* + 1. *n* represents a count of cameras, *p* represents the sequence number of the camera that captures the least count of subjects, *q* represents the sequence number of the leftmost image in stitching.

In S805, after obtaining an updated stitch sequence, the stitch module may restitch according to the updated stitch sequence to complete an automatic view angle adjustment.

In S806, the above operations may be performed until service ends, and stitch sequence information may be stored in the storage medium of the device for futher use.

In some embodiments, according to the count of moving subjects in the image source, the sequence number corresponding to the image source with the least count of moving subjects may be set at the header position or the end position of the stitch sequence, other position of the stitch sequence may be set according to the sequence numbers corresponding to other image sources to adjust the stitch sequence of the panoramic image. During the operation of the panoramic image capturing device, the device may adjust a view angle to improve the visual effect and solve the problem that the physical position of the shot needs to be readjusted when a view angle is changed during the use of other devices in the relevant technology.

It should be noted that the operations shown in the above process or in the flowchart can be executed in a computer system such as a set of computer executable instructions, and that, although a logical sequence is shown in the flowchart, in some cases, the steps shown or described can be executed in a sequence different from that here.

The embodiments provide a device for stitching the panoramic image, which is used to realize the above embodiments and preferred embodiments. It will not be described again if it has been described. The terms "module," "unit," "sub unit," or the like used below are combinations of software and/or hardware that can realize a predetermined function. Although the device described in the following embodiments is preferably implemented in software, the implementation of hardware, or a combination of software and hardware, is also possible and contemplated.

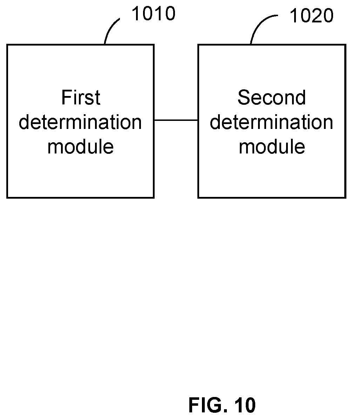

FIG. 10 is a schematic diagram illustrating an exemplary structure of a device for stitching a panoramic image according to some embodiments of the present disclosure, the device may include a first determination module 1010 and a second determination module 1020.

The first determination module 1010 may be configured to determine a stitch sequence of the image sources to be stitched according to sequence numbers of the image sources to be stitched and a stitch rule; the sequence numbers of the image sources may be set correspondingly to positions of the cameras that capture the image sources.

The second determination module 1020 may be configured to obtain a panoramic image by stitching the obtained image sources to be stitched according to the stitch sequence.

It should be noted that each of the above modules may be either a functional module or a program module, which may be implemented by software or hardware. For modules implemented by hardware, the above modules may be located in the same processor; or each of the above modules may also be located in different processors in the form of any combination.

The embodiments also provide an electronic device, including a memory and a processor, the memory may include computer program, and the processor may be set to run the computer program to perform the operations in any of the above method embodiments.

Optionally, the electronic device may also include a transmission device and an input/output device, wherein the transmission device may be connected with the processor, and the input/output device may be connected with the processor.

Optionally, in the embodiment, the above processor may be set to perform the following operations through the computer program.

In S1, according to the sequence numbers of the image sources to be stitched and a stitch rule, the sequence numbers of the image sources to be stitched may be determined; the sequence numbers of the image sources may be set corresponding to positions of the cameras that capture the image sources.

In S2, according to the stitch sequence, a panoramic image may be obtained by stitching the obtained image sources to be stitched.

It should be noted that the specific examples in this embodiment may refer to the examples described in the above embodiments and optional embodiments, and will not be repeated in this embodiment.

In addition, in combination with a panoramic image stitching method provided in the above embodiment, a storage medium can also be provided in this embodiment. A computer program may be stored on the storage medium; the operation of any one method for stitching the panoramic image in the above embodiments may be realized when the processor performs the computer program.

The basic concepts have been described. Obviously, for those skilled in the art, the detailed disclosure may be only an example and may not constitute a limitation to the present disclosure.

It should be noted that the above description is provided for illustrative purposes only and is not intended to limit the scope of the present disclosure.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by this disclosure and are within the spirit and scope of the exemplary embodiments of this disclosure.

Moreover, certain terminology has been used to describe embodiments of the present disclosure. For example, the terms "one embodiment," "an embodiment," and/or "some embodiments" mean that a particular feature, structure, or characteristic described in connection with the embodiment is included in at least one embodiment of the present disclosure. Therefore, it is emphasized and should be appreciated that two or more references to "an embodiment" or "one embodiment" or "an alternative embodiment" in various portions of the specification are not necessarily all referring to the same embodiment. In addition, some features, structures, or features in the present disclosure of one or more embodiments may be appropriately combined.

Moreover, unless otherwise specified in the claims, the sequence of the processing elements and sequences of the present application, the use of digital letters, or other names are not used to define the order of the application flow and methods. Although the above disclosure discusses through various examples what is currently considered to be a variety of useful embodiments of the disclosure, it is to be understood that such detail is solely for that purpose and that the appended claims are not limited to the disclosed embodiments.

Similarly, it should be appreciated that in the foregoing description of embodiments of the present disclosure, various features are sometimes grouped together in a single embodiment, figure, or description thereof for the purpose of streamlining the disclosure and aiding in the understanding of one or more of the various embodiments. However, this disclosure may not mean that the present disclosure object requires more features than the features mentioned in the claims. In fact, the features of the embodiments are less than all of the features of the individual embodiments disclosed above.

In some embodiments, the numbers expressing quantities, properties, and so forth, used to describe and claim certain embodiments of the application are to be understood as being modified in some instances by the term "about," "approximate," or "substantially." Unless otherwise stated, "about," "approximate," or "substantially" may indicate a ±20% variation of the value it describes. Accordingly, in some embodiments, the numerical parameters set forth in the description and attached claims are approximations that may vary depending upon the desired properties sought to be obtained by a particular embodiment. In some embodiments, the numerical parameters should be construed in light of the number of reported significant digits and by applying ordinary rounding techniques. Although the numerical domains and parameters used in the present application are used to confirm the range of ranges, the settings of this type are as accurate in the feasible range in the feasible range in the specific embodiments.

At last, it should be understood that the embodiments described in the disclosure are used only to illustrate the principles of the embodiments of this application. Other modifications may be within the scope of the present disclosure. Thus, by way of example, but not of limitation, alternative configurations of the embodiments of the present disclosure may be utilized in accordance with the teachings herein. Accordingly, embodiments of the present disclosure are not limited to that precisely as shown and described.

## Claims

1. A computer-implemented method for producing a panoramic image, comprising:
obtaining a plurality of images to be stitched by multiple imaging shots;
determining a target imaging shot from the multiple imaging shots according to an imaging situation of the multiple imaging shots, wherein the imaging situation includes at least one of imaging priority or imaging quality, each of the multiple imaging shots corresponds to a camera and the imaging quality includes a count of moving subjects captured by the camera once or multiple times within a preset time period, and the count of moving subjects captured by the camera within the preset time period is determined by:
obtaining a sample panoramic image stitched by a plurality of sample images, the plurality of sample images being captured by a plurality of cameras corresponding to the multiple imaging shots, each of the plurality of sample images being captured in a single imaging shot by a corresponding camera of the plurality of cameras;
determining a pixel position of each moving subject of a plurality of moving subjects in the sample panoramic image;
determining a camera that captures the each moving subject, based on the pixel position of the each moving subject and a size of the sample panoramic image; and
determining the count of moving subjects based on cameras that capture the plurality of moving subjects;
determining an image to be stitched obtained by the target imaging shot as a target image to be stitched;
determining a stitch sequence of the plurality of images to be stitched,
wherein the target image to be stitched is placed at a preset stitch position and an adjacence relationship of the plurality of images to be stitched in the stitch sequence corresponds to an adjacence relationship of the multiple imaging shots; and
obtaining the panoramic image by stitching the plurality of images to be stitched according to the stitch sequence.

2. The method of claim 1, wherein the preset stitch position is a header stitch position or an end stitch position of the stitch sequence.

3. The method of claim 1, wherein an imaging shot with an imaging situation that satisfies a preset condition in the multiple imaging shots is determined as the target imaging shot.

4. The method of claim 1, wherein for the each moving subject,
the camera that captures the each moving subject is determined based on a quotient of a target sum value divided by a count of the plurality of cameras, wherein the target sum value is a sum of the count of the plurality of cameras and a quotient of the pixel position of the each moving subject divided by the size of the sample panoramic image.

5. A system for producing a panoramic image, comprising:
at least one storage device storing a set of instructions; and
at least one processor in communication with the storage device, wherein when executing the set of instructions, the at least one processor is configured to cause the system to perform operations including:
obtaining a plurality of images to be stitched by multiple imaging shots;
determining a target imaging shot from the multiple imaging shots according to an imaging situation of the multiple imaging shots, wherein the imaging situation includes at least one of imaging priority or imaging quality, each of the multiple imaging shots corresponds to a camera and the imaging quality includes a count of moving subjects captured by the camera once or multiple times within a preset time period, and the count of moving subjects captured by the camera within the preset time period is determined by:
obtaining a sample panoramic image stitched by a plurality of sample images, the plurality of sample images being captured by a plurality of cameras corresponding to the multiple imaging shots, each of the plurality of sample images being captured in a single imaging shot by a corresponding camera of the plurality of cameras;
determining a pixel position of each moving subject of a plurality of moving subjects in the sample panoramic image;
determining a camera that captures the each moving subject, based on the pixel position of the each moving subject and a size of the sample panoramic image; and
determining the count of moving subjects based on cameras that capture the plurality of moving subjects;
determining an image to be stitched obtained by the target imaging shot as a target image to be stitched;
determining a stitch sequence of the plurality of images to be stitched,
wherein the target image to be stitched is placed at a preset stitch position and an adjacence relationship of the plurality of images to be stitched in the stitch sequence corresponds to an adjacence relationship of the multiple imaging shots; and
obtaining the panoramic image by stitching the plurality of images to be stitched according to the stitch sequence.

6. The system of claim 5, wherein the preset stitch position is a header stitch position or an end stitch position of the stitch sequence.

7. The system of claim 5, wherein an imaging shot with an imaging situation that satisfies a preset condition in the multiple imaging shots is determined as the target imaging shot.

8. A non-transitory computer readable medium, comprising executable instructions that, when executed by at least one processor, direct the at least one processor to perform a method, the method comprising:
obtaining a plurality of images to be stitched by multiple imaging;
determining a target imaging shot from the multiple imaging shots according to an imaging situation of the multiple imaging shots, wherein the imaging situation includes at least one of imaging priority or imaging quality, each of the multiple imaging shots corresponds to a camera and the imaging quality includes a count of moving subjects captured by the camera once or multiple times within a preset time period, and the count of moving subjects captured by the camera within the preset time period is determined by:
obtaining a sample panoramic image stitched by a plurality of sample images, the plurality of sample images being captured by a plurality of cameras corresponding to the multiple imaging shots, each of the plurality of sample images being captured in a single imaging shot by a corresponding camera of the plurality of cameras;
determining a pixel position of each moving subject of a plurality of moving subjects in the sample panoramic image;
determining a camera that captures the each moving subject, based on the pixel position of the each moving subject and a size of the sample panoramic image; and
determining the count of moving subjects based on cameras that capture the plurality of moving subjects;
determining an image to be stitched obtained by the target imaging shot as a target image to be stitched;
determining a stitch sequence of the plurality of images to be stitched,
wherein the target image to be stitched is placed at a preset stitch position and an adjacence relationship of the plurality of images to be stitched in the stitch sequence corresponds to an adjacence relationship of the multiple imaging; and
obtaining the panoramic image by stitching the plurality of images to be stitched according to the stitch sequence.

## Patentansprüche

1. Computerimplementiertes Verfahren zum Erzeugen eines Panoramabildes, umfassend:
Erhalten einer Vielzahl von zu stitchenden Bildern durch mehreren Bildaufnahmen;
Bestimmen einer Zielbildaufnahme aus den mehreren Bildaufnahmen gemäß einer Aufnahmesituation der mehreren Bildaufnahmen, wobei die Aufnahmesituation mindestens eines von Aufnahmepriorität oder Aufnahmequalität beinhaltet, jede der mehreren Bildaufnahmen einer Kamera entspricht und die Aufnahmequalität einen Zählwert sich bewegender Subjekte beinhaltet, die innerhalb eines voreingestellten Zeitraums ein- oder mehrmals von der Kamera erfasst wurden, und der Zählwert sich bewegender Subjekte, die innerhalb des voreingestellten Zeitraums von der Kamera erfasst wurden, bestimmt wird durch:
Erhalten eines Beispielpanoramabildes, das aus einer Vielzahl von Beispielbildern gestitcht ist, wobei die Vielzahl von Beispielbildern von einer Vielzahl von Kameras erfasst werden, die den mehreren Bildaufnahmen entsprechen, wobei jedes der Vielzahl von Beispielbildern in einer einzigen Bildaufnahme von einer entsprechenden Kamera der Vielzahl von Kameras erfasst wird;
Bestimmen einer Pixelposition jedes sich bewegenden Subjekts einer Vielzahl von sich bewegenden Subjekten in dem Beispielpanoramabild;
Bestimmen einer Kamera, die das jeweilige sich bewegende Subjekt erfasst, auf Grundlage der Pixelposition des jeweiligen sich bewegenden Subjekts und einer Größe des Beispielpanoramabildes; und
Bestimmen des Zählwerts sich bewegender Subjekte auf Grundlage von Kameras, die die Vielzahl von sich bewegenden Subjekten erfassen;
Bestimmen eines zu stitchenden Bildes, das durch die Zielbildaufnahme erhalten wurde, als zu stitchendes Zielbild;
Bestimmen einer Stitching-Folge der Vielzahl von zu stitchenden Bildern, wobei das zu stitchende Zielbild an einer voreingestellten Stitching-Position platziert wird und eine Nachbarschaftsbeziehung der Vielzahl von zu stitchenden Bildern in der Stitching-Folge einer Nachbarschaftsbeziehung der mehreren Bildaufnahmen entspricht; und
Erhalten des Panoramabildes durch Stitchen der Vielzahl von zu stitchenden Bildern gemäß der Stitching-Folge.

2. Verfahren nach Anspruch 1, wobei die voreingestellte Stitching-Position eine Stitching-Position am Anfang oder eine Stitching-Position am Ende der Stitching-Folge ist.

3. Verfahren nach Anspruch 1, wobei eine Bildaufnahme mit einer Aufnahmesituation, die eine voreingestellte Bedingung erfüllt, in den mehreren Bildaufnahmen als Zielbildaufnahme bestimmt wird.

4. Verfahren nach Anspruch 1, wobei für das jeweilige sich bewegende Subjekt
die Kamera, die das jeweilige sich bewegende Subjekt erfasst, auf Grundlage eines Quotienten aus einem Zielsummenwert dividiert durch eine Zahl der Vielzahl von Kameras bestimmt wird, wobei der Zielsummenwert eine Summe aus der Zahl der Vielzahl von Kameras und einem Quotienten der Pixelposition des jeweiligen sich bewegenden Subjekts dividiert durch die Größe des Beispielpanoramabildes ist.

5. System zum Erzeugen eines Panoramabildes, umfassend:
mindestens eine Speichervorrichtung, die einen Satz Anweisungen speichert; und
mindestens einen Prozessor, der in Kommunikation mit der Speichervorrichtung steht, wobei der mindestens eine Prozessor so konfiguriert ist, dass er, wenn er den Satz Anweisungen ausführt, das System dazu bringt, Operationen durchzuführen, die Folgendes beinhalten:
Erhalten einer Vielzahl von zu stitchenden Bildern durch mehreren Bildaufnahmen;
Bestimmen einer Zielbildaufnahme aus den mehreren Bildaufnahmen gemäß einer Aufnahmesituation der mehreren Bildaufnahmen, wobei die Aufnahmesituation mindestens eines von Aufnahmepriorität oder Aufnahmequalität beinhaltet, jede der mehreren Bildaufnahmen einer Kamera entspricht und die Aufnahmequalität einen Zählwert sich bewegender Subjekte beinhaltet, die innerhalb eines voreingestellten Zeitraums ein- oder mehrmals von der Kamera erfasst wurden, und der Zählwert sich bewegender Subjekte, die innerhalb des voreingestellten Zeitraums von der Kamera erfasst wurden, bestimmt wird durch:
Erhalten eines Beispielpanoramabildes, das aus einer Vielzahl von Beispielbildern gestitcht ist, wobei die Vielzahl von Beispielbildern von einer Vielzahl von Kameras erfasst werden, die den mehreren Bildaufnahmen entsprechen, wobei jedes der Vielzahl von Beispielbildern in einer einzigen Bildaufnahme von einer entsprechenden Kamera der Vielzahl von Kameras erfasst wird;
Bestimmen einer Pixelposition jedes sich bewegenden Subjekts einer Vielzahl von sich bewegenden Subjekten in dem Beispielpanoramabild;
Bestimmen einer Kamera, die das jeweilige sich bewegende Subjekt erfasst, auf Grundlage der Pixelposition des jeweiligen sich bewegenden Subjekts und einer Größe des Beispielpanoramabildes; und
Bestimmen des Zählwerts sich bewegender Subjekte auf Grundlage von Kameras, die die Vielzahl von sich bewegenden Subjekten erfassen;
Bestimmen eines zu stitchenden Bildes, das durch die Zielbildaufnahme erhalten wurde, als zu stitchendes Zielbild;
Bestimmen einer Stitching-Folge der Vielzahl von zu stitchenden Bildern, wobei das zu stitchende Zielbild an einer voreingestellten Stitching-Position platziert wird und eine Nachbarschaftsbeziehung der Vielzahl von zu stitchenden Bildern in der Stitching-Folge einer Nachbarschaftsbeziehung der mehreren Bildaufnahmen entspricht; und
Erhalten des Panoramabildes durch Stitchen der Vielzahl von zu stitchenden Bildern gemäß der Stitching-Folge.

6. System nach Anspruch 5, wobei die voreingestellte Stitching-Position eine Stitching-Position am Anfang oder eine Stitching-Position am Ende der Stitching-Folge ist.

7. System nach Anspruch 5, wobei eine Bildaufnahme mit einer Aufnahmesituation, die eine voreingestellte Bedingung erfüllt, in den mehreren Bildaufnahmen als Zielbildaufnahme bestimmt wird.

8. Nichtflüchtiges, computerlesbares Medium, das ausführbare Anweisungen umfasst, die, wenn sie von mindestens einem Prozessor ausgeführt werden, den mindestens einen Prozessor anweisen, ein Verfahren durchzuführen, wobei das Verfahren umfasst:
Erhalten einer Vielzahl von zu stitchenden Bildern durch mehreren Bildaufnahmen;
Bestimmen einer Zielbildaufnahme aus den mehreren Bildaufnahmen gemäß einer Aufnahmesituation der mehreren Bildaufnahmen, wobei die Aufnahmesituation mindestens eines von Aufnahmepriorität oder Aufnahmequalität beinhaltet, jede der mehreren Bildaufnahmen einer Kamera entspricht und die Aufnahmequalität einen Zählwert sich bewegender Subjekte beinhaltet, die innerhalb eines voreingestellten Zeitraums ein- oder mehrmals von der Kamera erfasst wurden, und der Zählwert sich bewegender Subjekte, die innerhalb des voreingestellten Zeitraums von der Kamera erfasst wurden, bestimmt wird durch:
Erhalten eines Beispielpanoramabildes, das aus einer Vielzahl von Beispielbildern gestitcht ist, wobei die Vielzahl von Beispielbildern von einer Vielzahl von Kameras erfasst werden, die den mehreren Bildaufnahmen entsprechen, wobei jedes der Vielzahl von Beispielbildern in einer einzigen Bildaufnahme von einer entsprechenden Kamera der Vielzahl von Kameras erfasst wird;
Bestimmen einer Pixelposition jedes sich bewegenden Subjekts einer Vielzahl von sich bewegenden Subjekten in dem Beispielpanoramabild;
Bestimmen einer Kamera, die das jeweilige sich bewegende Subjekt erfasst, auf Grundlage der Pixelposition des jeweiligen sich bewegenden Subjekts und einer Größe des Beispielpanoramabildes; und
Bestimmen des Zählwerts sich bewegender Subjekte auf Grundlage von Kameras, die die Vielzahl von sich bewegenden Subjekten erfassen;
Bestimmen eines zu stitchenden Bildes, das durch die Zielbildaufnahme erhalten wurde, als zu stitchendes Zielbild;
Bestimmen einer Stitching-Folge der Vielzahl von zu stitchenden Bildern, wobei das zu stitchende Zielbild an einer voreingestellten Stitching-Position platziert wird und eine Nachbarschaftsbeziehung der Vielzahl von zu stitchenden Bildern in der Stitching-Folge einer Nachbarschaftsbeziehung der mehreren Bildaufnahmen entspricht; und
Erhalten des Panoramabildes durch Stitchen der Vielzahl von zu stitchenden Bildern gemäß der Stitching-Folge.

## Revendications

1. Procédé mis en œuvre par ordinateur de production d'une image panoramique, comprenant :
l'obtention d'une pluralité d'images à assembler à partir de multiples clichés d'imagerie ;
la détermination d'un cliché d'imagerie cible parmi les multiples clichés d'imagerie en fonction d'une situation d'imagerie des multiples clichés d'imagerie, dans lequel la situation d'imagerie inclut au moins l'une d'une priorité d'imagerie ou d'une qualité d'imagerie, chacun des multiples clichés d'imagerie correspond à un appareil photo et la qualité d'imagerie inclut un nombre de sujets mobiles capturés par l'appareil photo une ou plusieurs fois au cours d'une période prédéfinie, et le nombre de sujets mobiles capturés par l'appareil photo au cours de la période prédéfinie est déterminé par :
l'obtention d'une image panoramique d'exemple assemblée à partir d'une pluralité d'images d'exemple, la pluralité d'images d'exemple étant capturées par une pluralité d'appareils photo correspondant aux multiples clichés d'imagerie, chacune de la pluralité d'images d'exemple étant capturée en un seul cliché d'imagerie par un appareil photo correspondant de la pluralité d'appareils photo ;
la détermination d'une position de pixel de chaque sujet mobile d'une pluralité de sujets mobiles dans l'image panoramique d'exemple ;
la détermination d'un appareil photo qui capture chaque sujet mobile, sur la base de la position de pixel de chaque sujet mobile et d'une taille de l'image panoramique d'exemple ; et
la détermination du nombre de sujets mobiles sur la base d'appareils photo qui capturent la pluralité de sujets mobiles ;
la détermination d'une image à assembler obtenue par le cliché d'imagerie cible comme image cible à assembler ;
la détermination d'une séquence d'assemblage de la pluralité d'images à assembler, dans lequel l'image cible à assembler est placée à une position d'assemblage prédéfinie et une relation d'adjacence de la pluralité d'images à assembler dans la séquence d'assemblage correspond à une relation d'adjacence des multiples clichés d'imagerie ; et
l'obtention de l'image panoramique en assemblant la pluralité d'images à assembler selon la séquence d'assemblage.

2. Procédé selon la revendication 1, dans lequel la position d'assemblage prédéfinie est une position d'assemblage d'en-tête ou une position d'assemblage de fin de la séquence d'assemblage.

3. Procédé selon la revendication 1, dans lequel un cliché d'imagerie avec une situation d'imagerie qui satisfait à une condition prédéfinie dans les multiples clichés d'imagerie est déterminé comme le cliché d'imagerie cible.

4. Procédé selon la revendication 1, dans lequel, pour chaque sujet mobile,
l'appareil photo qui capture chaque sujet mobile est déterminé sur la base d'un quotient d'une valeur de somme cible divisée par un nombre de la pluralité d'appareils photo, dans lequel la valeur de somme cible est la somme du nombre de la pluralité d'appareils photo et d'un quotient de la position de pixel de chaque sujet mobile divisée par la taille de l'image panoramique d'exemple.

5. Système de production d'une image panoramique, comprenant :
au moins un dispositif de stockage incluant un ensemble d'instructions ; et
au moins un processeur en communication avec le dispositif de stockage, dans lequel, lors de l'exécution de l'ensemble d'instructions, le au moins un processeur est configuré pour amener le système à effectuer des opérations incluant :
l'obtention d'une pluralité d'images à assembler à partir de multiples clichés d'imagerie ;
la détermination d'un cliché d'imagerie cible parmi les multiples clichés d'imagerie en fonction d'une situation d'imagerie des multiples clichés d'imagerie, dans lequel la situation d'imagerie inclut au moins l'une d'une priorité d'imagerie ou d'une qualité d'imagerie, chacun des multiples clichés d'imagerie correspond à un appareil photo et la qualité d'imagerie inclut un nombre de sujets mobiles capturés par l'appareil photo une ou plusieurs fois au cours d'une période prédéfinie, et le nombre de sujets mobiles capturés par l'appareil photo au cours de la période prédéfinie est déterminé par :
l'obtention d'une image panoramique d'exemple assemblée à partir d'une pluralité d'images d'exemple, la pluralité d'images d'exemple étant capturées par une pluralité d'appareils photo correspondant aux multiples clichés d'imagerie, chacune de la pluralité d'images d'exemple étant capturée en un seul cliché d'imagerie par un appareil photo correspondant de la pluralité d'appareils photo ;
la détermination d'une position de pixel de chaque sujet mobile d'une pluralité de sujets mobiles dans l'image panoramique d'exemple ;
la détermination d'un appareil photo qui capture chaque sujet mobile, sur la base de la position de pixel de chaque sujet mobile et d'une taille de l'image panoramique d'exemple ; et
la détermination du nombre de sujets mobiles sur la base d'appareils photo qui capturent la pluralité de sujets mobiles ;
la détermination d'une image à assembler obtenue par le cliché d'imagerie cible comme image cible à assembler ;
la détermination d'une séquence d'assemblage de la pluralité d'images à assembler, dans lequel l'image cible à assembler est placée à une position d'assemblage prédéfinie et une relation d'adjacence de la pluralité d'images à assembler dans la séquence d'assemblage correspond à une relation d'adjacence des multiples clichés d'imagerie ; et
l'obtention de l'image panoramique en assemblant la pluralité d'images à assembler selon la séquence d'assemblage.

6. Système selon la revendication 5, dans lequel la position d'assemblage prédéfinie est une position d'assemblage d'en-tête ou une position d'assemblage de fin de la séquence d'assemblage.

7. Système selon la revendication 5, dans lequel un cliché d'imagerie avec une situation d'imagerie qui satisfait à une condition prédéfinie dans les multiples clichés d'imagerie est déterminé comme le cliché d'imagerie cible.

8. Support non transitoire lisible par ordinateur, comprenant des instructions exécutables qui, lorsqu'elles sont exécutées par au moins un processeur, amènent le au moins un processeur à effectuer un procédé, le procédé comprenant :
l'obtention d'une pluralité d'images à assembler à partir de multiples clichés d'imagerie ;
la détermination d'un cliché d'imagerie cible parmi les multiples clichés d'imagerie en fonction d'une situation d'imagerie des multiples clichés d'imagerie, dans lequel la situation d'imagerie inclut au moins l'une d'une priorité d'imagerie ou d'une qualité d'imagerie, chacun des multiples clichés d'imagerie correspond à un appareil photo et la qualité d'imagerie inclut un nombre de sujets mobiles capturés par l'appareil photo une ou plusieurs fois au cours d'une période prédéfinie, et le nombre de sujets mobiles capturés par l'appareil photo au cours de la période prédéfinie est déterminé par :
l'obtention d'une image panoramique d'exemple assemblée à partir d'une pluralité d'images d'exemple, la pluralité d'images d'exemple étant capturées par une pluralité d'appareils photo correspondant aux multiples clichés d'imagerie, chacune de la pluralité d'images d'exemple étant capturée en un seul cliché d'imagerie par un appareil photo correspondant de la pluralité d'appareils photo ;
la détermination d'une position de pixel de chaque sujet mobile d'une pluralité de sujets mobiles dans l'image panoramique d'exemple ;
la détermination d'un appareil photo qui capture chaque sujet mobile, sur la base de la position de pixel de chaque sujet mobile et d'une taille de l'image panoramique d'exemple ; et
la détermination du nombre de sujets mobiles sur la base d'appareils photo qui capturent la pluralité de sujets mobiles ;
la détermination d'une image à assembler obtenue par le cliché d'imagerie cible comme image cible à assembler ;
la détermination d'une séquence d'assemblage de la pluralité d'images à assembler, dans lequel l'image cible à assembler est placée à une position d'assemblage prédéfinie et une relation d'adjacence de la pluralité d'images à assembler dans la séquence d'assemblage correspond à une relation d'adjacence des multiples clichés d'imagerie ; et
l'obtention de l'image panoramique en assemblant la pluralité d'images à assembler selon la séquence d'assemblage.
